# EUROPEAN PATENT APPLICATION

(11) **EP 4 656 060 A1**
(43) Date of publication of application: **03.12.2025**
(21) Application number: 24178881.9
(22) Date of filing: 29.05.2024
(51) Int. Cl.: A23J 3/14, A23L 15/00, A23L 29/206, A23L 29/262

(54) **EGG SUBSTITUTE PRODUCT ON A VEGAN BASIS IN FORM OF A BOILED EGG**

(71) Applicant: Neggst Foods GmbH, 13088 Berlin (DE)
(72) Inventor: Garcia-Arteaga, Veronica, 13088 Berlin (DE); Morales Romero, Aurora, 13088 Berlin (DE); Moria, Stella, 13088 Berlin (DE)
(74) Representative: Schüssler, Andrea

(57) **Abstract**

The invention relates to a vegan-based egg substitute product in form of a boiled egg and a method of producing it.

## Description

### Field of application

The invention relates to a vegan-based egg substitute product in form of a boiled egg and a method of producing it.

### Background art

Awareness of the importance of a sustainable lifestyle means that a purely plant-based diet is also becoming increasingly important. In addition to pure vegans and vegetarians, more and more people are trying to reduce their consumption of animal products (flexitarians and flexigans). As a result of the latter, more and more plant-based foods that offer consumers a similar taste experience to the corresponding animal products are in demand and also available.

Eggs are a high-quality source of protein and, in addition to direct consumption, fulfil many tasks in foods such as the formation of emulsions and foams as well as the stabilization of doughs. Due to the wide range of possible uses, finding a vegan alternative for eggs that covers as many areas as possible is a major challenge.

Chicken egg yolk is a fat-in-water emulsion and, in addition to just under 50% water, contains approx. 30% fat, approx. 17% proteins, minerals and vitamins. Due to its high phospholipid content (approx. 30% of the fat), egg yolk is a very good emulsifier and the carotenoids it contains give it its characteristic yellow-orange color.

In the kitchen, it is mainly used as an emulsifier (for mayonnaise, for example), to loosen foam and bind creams and to stabilize crumbs in baked goods. When heated above 72°C, the egg yolk solidifies.

The egg white accounts for 55-60% of the total egg weight. In addition to 80-84% water, egg white contains 12% protein, 0.7% carbohydrates, 0.7% minerals and 0.03% lipids. Depending on the freshness of the product, egg white has a pH value of 7.6 to 9.7; the pH value increases during storage due to CO₂ diffusion through the eggshell. Egg white contains various proteins: ovalbumin (54%), conalbumin (12%), ovomucoid (11%) and ovomucin (3.5%). Due to its protein content and its high-quality amino acid composition, egg white of animal origin is an important source of protein. It contains all the amino acids essential for humans and therefore has a high protein value.

WO 2017/014967 A1 and WO 2017/014806 A1 concern plant-based egg substitute compositions characterized by a high content of hydrocolloids.

WO 2019/220431 A1 also concerns egg substitute compositions characterized by more than 5% hydrocolloids.

WO 89/10704 concerns an egg substitute in which the egg yolk substitute is surrounded by a membrane and is combined with a natural egg white or a treated egg white or an egg white analogue.

There are already various other egg yolk substitutes, which are usually based on a mixture of starches and hydrocolloids, sometimes also plant proteins (US 2013/0084361 A1; DE 603 13 732 T2). They can be used as dry or liquid products in foods, where they can largely or partially take over the tasks of egg yolk (comparable color, binding). Some of these products also have a comparable rheology to animal egg yolk. If these foods are brought into contact with a light water-containing food (e.g. egg white or egg white substitute) for a period of more than 7 days, the yellow or orange color diffuses from the "egg yolk" into the "egg white". This means that egg yolk and egg white in a flowable form cannot be stored side by side without mixing. Furthermore, they do not have the characteristic curved shape of a fresh animal egg yolk.

### Object of the present invention

The object of the present invention is to provide a vegan-based biphasic foodstuff consisting of at least one phase similar to an egg yolk and a phase surrounding the egg yolk similar to an egg white. This foodstuff should be able to be processed in the same way as an animal egg, i.e. the egg white should solidify when treated in the usual way to prepare a boiled egg while egg white is solid and the egg yolk is solid or semisolid.

### Description of the invention

The problem is solved by an egg substitute product on a vegan basis, comprising in a food container an egg yolk substitute base mixture (1) of:
(a) drinking water
(b) one or more protein(s) from legumes, oilseeds, cereals, algae or microorganisms,
(c) vegetable oil and/or fat replacer,
(d) optionally one or more emulsifier(s)
(e) one or more cold-set gelling and/or thermogelling hydrocolloid(s),
(f) at least one carotenoid-containing foodstuff and/or a natural coloring substance,
(f) optionally at least one native or partially pregelatinized starch
(g) salt,
the mixture (1) being surrounded by a mixture (2) comprising:
(i) drinking water
(ii) one or more protein(s) from legumes, oilseeds, cereals, microorganisms and/or algae,
(iii) one or more cold set gelling hydrocolloid or a combination of one or more thermogelling hydrocolloid(s) with one or more cold set gelling hydrocolloid(s),
(iv) one or more salt(s).

The percentages mentioned in the following text are in each case % by weight.

"Vegan-based" means that no animal or animal-derived ingredients are present.

The mixture hereinafter also referred to as "egg yolk" or "egg yolk substitute product", preferably has a protein content of between 3% and 25%, advantageously between 5% and 20%, very advantageously between 8% and 18%. Suitable protein sources are vegetable raw materials from the group of legumes, cereals, oilseeds, (micro)algae and microorganisms, preferably peas (Pisum sativum), chickpeas (Cicer arientinum), garden beans (Phaseolus vulgaris), faba beans (Vicia faba), sweet lupins (Lupinus), Lentils (Lens culinaris), maize (Zea mays), hemp (Cannabis sativa), sweet potatoes (Ipomoea batatas), manioc (Manihot esculenta), table potatoes (Solanum tuberosum), pumpkin (Cucurbita), linseed (Linum usitatissimum), rapeseed (Brassica napus), soy (Glycine max), oats (Avena sativa), duckweed (Lemna), bacteria (e. g. e.g. Lactobacillus spp, Streptococcus spp., and Bifidobacterium spp), yeasts (e.g. Saccharomyces cerevisiae), molds (e.g. Aspergillus spp., Mucor spp., and Rhizopus spp.), nori algae and/or wakame algae, particularly advantageous are faba bean, pea, lupin, potato, chickpea and field bean proteins. As protein source, (raw and/or hydrolyzed and/or fermented) flours, protein concentrates, protein isolates and/or any combination thereof, which can be obtained from the plants and plant parts per se, their seeds, tubers and/or their fruits of the aforementioned raw materials, can be used. The processing and nutritional suitability of the plants and respective plant parts is sufficiently known to the skilled person in the field of food technology.

The fat content of the egg yolk mixture is preferably between 0.1% and 20%, advantageously between 1.0% and 15%, very advantageously between 3.0% and 10%. Suitable fat components are vegetable oils, e.g. olive oil, coconut oil, linseed oil, walnut oil, safflower oil or peanut oil; however, tasteless oils such as rapeseed oil, sunflower oil and/or corn oil are preferred. Instead of or in addition to fat components, fat replacers may be used. These fat replacers could be fat substituents (e.g. fatty acid polyesters, structured lipids, glycerol or ester products) or fat mimetics (e.g. gums, maltodextrins, dextrins, cellulose, cellulose derivatives, oatrim or oleogels).

Emulsifiers may optionally be added to the fat component in amounts of 0.025 - 1.0%, preferably 0.075-0.25%, based on the whole mixture. Suitable emulsifiers are, for example, (vegetable) lecithin, e.g. sunflower lecithin. Other suitable emulsifiers are oleogels, Saponin sources, gums (preferably from algae), phosphatidylcholine, phosphatidylserine, phosphatidylethanolamine or phosphatidylinositol, ascorbyl palmitate, sodium phosphate, sodium pyrophosphate, potassium phosphate, propylene glycol alginate, destilled glycerol monostearate (DMG, E471), polyoxyethyl stearate, ammonium phosphatides, acetic acid monoglycerides, lactic acid monoglycerides, citric acid monoglycerides, tartaric acid monoglycerides, stearyl tartrate or sorbitan monostearate. Preferred are destilled glycerol monostearate (E471) and sunflower lecithin.

To give the egg yolk substitute product the right color, at least one carotenoid-containing food and/or natural colorants are added as an additional ingredient. Preparations made from fruits, vegetables (tomatoes, peppers, pumpkin) and tubers are suitable for this purpose, preferably from tubers and root vegetables, e.g. carrots, turmeric, beetroot and/or sweet potato. These are preferably cooked and processed into mash, finely chopped or as powder. In some embodiments, the amount of carotenoid-containing foods in the egg yolk is less than 10.0% (e.g., less than 8.00%, less than 5.00%, less than 1.50%, or less than 0.50%). In some embodiments, the amount of carotenoid-containing food in the egg yolk is 0.1%-10.0% (e.g., 0.5%-8% or 3.00%-6.00%). It has been found that the use of sweet potatoes as a carotenoid-containing food surprisingly leads to the formation of a texture and color similar to the classic chicken egg yolk, whereby the use of sweet potatoes also supports the protein content and fiber content and brings a starch component into the mixture, which has a beneficial effect on the texture. The amount of sweet potato can be between 1% and 10%, advantageously between 3% and 6%. In the case that sweet potato is present as a carotenoid-containing food, the further addition of an at least partially pregelatinized starch is dispensable (0%) or can be limited to a small amount of less than 0.5%. Otherwise, the addition of at least one native or (partially) pregelatinized starch is recommended, preferably in an amount of 0.1 % - 5%, more preferably 0.50% - 3.0%. Starch is preferably obtained from corn starch, pea starch, potato starch or rice starch. The starch is used mainly as a gelling agent but it can also act as binding or thickener agent.

Other suitable preparations made from fruit, vegetables and tubers can optionally be used to adjust the texture, mouthfeel and color. The addition of natural colorants, preferably fat-soluble ones such as carotenoids (e.g. β-carotene, lycopene, zeaxanthin), carrot extracts, curcumin and colorants that are not easily soluble in water, such as riboflavin, are also suitable for optimum color adjustment. These are used individually or in combination to achieve the desired color. In some embodiments, the amount of natural colorants in the egg yolk is less than 2.00% (e.g., less than 1.50%, less than 1.00%, less than 0.75%, or less than 0.25%) In some embodiments, the amount of natural colorants in the egg yolk is 0.01%-2.00% (e.g., 0.25%-1.75%, 1.00%-0.50%, or 1.75%-0.25%). The egg yolk color can range from yellow to dark orange in the L*a*b* color space. The lightness (L*) can range from 70-85, advantageously from 75-80; the red-green (a*) can range from 15-30, advantageously from 19-25; the yellow-blue (b*) can be 60-95, advantageously 70-90, particularly advantageously 75-88.

Salt is added to enhance flavour. Preferably used are NaCl, KCl, NaH₂PO₄, Na₂HPO₄, Na₂P₄O₇ (tetrasodium pyrophosphate), Na-, Ca- or K-citrate, Ca-lactate, CaCl₂, Na₃PO₄ and/or kala-namak (black salt) or a salt comparable to kala-namak, which has a proportion of sulphur compounds. To this end, in some embodiments, the amount of salt is less than 3.00%, e.g., 0.05 - 2.9%, preferably 0.1-2.0 %. Additionally, other flavor formulations, masking agents, or a combination of thereof, can be used to hide undesired notes (e.g. beanie and bitter) to mimic chicken's egg flavour.

The egg yolk substitute product may optionally further contain small amounts (less than 10.0%, preferably less than 5%, 3% or 2%, preferably 0.05-3.0%) of additional minor components. These may be spices, dried vegetables or fruits, sugar, preservatives, acidifiers, buffering agents, fibers, thickeners or health-promoting additives. Additives which function as preservatives, buffering agents and/or acidifiers are glucono-delta-lactone, buffered vinegar (E-267), potassium lactate (E-326) or potassium sorbate. Examples of health-promoting additives include iodine, vitamins (e.g. vitamins B1, B2, B3, B5, B7, B9, B12, C, D3 or E) and/or minerals (e.g. Ca or Mg).

The egg yolk substitute product should contain one or more cold-set gelling and/or thermogelling hydrocolloids to set the desired viscosity, mouthfeel, emulsifying capacity and gelling if necessary. Suitable thermogelling hydrocolloids are preferably modified celluloses, preferably methyl celluloses, hydroxyethyl celluloses, hydroxypropyl methyl cellulose (HPMC) and/or hydroxypropyl cellulose. Hydrocolloids from algae, preferably carrageenan and/or agar, are used as cold-set gelling hydrocolloids. Other hydrocolloids, preferably gellan gum, locust bean gum, guar gum, alginate, konjac gum or their derivatives (e.g. glucomannan pyrophosphate) and/or xanthan gum, are also suitable to set the desired consistency and support the permanent solidification of the vegan egg yolk. Suitable amounts are 0.1% to 5.00% (e.g. 4.00%, 3.00%, 2.50%, 2.25%, 2.00%, 1.75%, 1.50%, 1.00%, 0.75% or equal to or less than 0.50%). The determination of the minimum concentration for cold-set gelling and/or thermogelling hydrocolloids is possible for the skilled person without great experimental effort. Below these concentrations (depending on the hydrocolloid) or if no hydrocolloid is added, the wanted gelation does not occur when the product mixture is heated or refrigerated.

The optimum amount of water depends to a certain extent on the exact composition of the egg yolk substitute product. This can be easily determined by first mixing in a relatively small amount of water. If the liquid egg yolk substitute is then thicker than desired, more water can be added. The viscosity of the egg yolk substitute is thus controlled by the addition of water to the aforementioned ingredients. The egg yolk substitute product may have an initial viscosity (before any heat or other treatment) defined as resistance to deformation at a given shear rate, in the range between 0.4 Pa-s and 200 Pa-s, 0.5 Pa-s and 200.0 Pa-s, preferably 0.7 Pa-s - 150 Pa-s; 1.51 Pa-s - 100 Pa-s or 50 Pa-s - 80 Pa-s. The viscosity can be measured using a rheometer (MCR92 SN83968846, Anton Paar GmbH, Graz, Austria) with a cylindrical measuring system (CC27-SN94184) or a plate system (PP50/S SN100671) with a measuring gap d = 1.136 mm and 1 mm respectively. A person skilled in the art knows how to measure viscosity with a rheometer. Only exemplary conditions are described below. If using the cylinder system, this system is filled with e.g. 15 ml of the sample. The sample is equilibrated for 5 minutes at 10°C and left like this for the measurement. The rotation is increased linearly from 0.1 - 1000 s-1 within 30 s. If using the plate system, the conditions are the same but the sample preparation differs, where an amount of e.g. 2 g is added to the plate surface. Afterwards, the upper plate sets in the right position, the sample is trimmed and the measurement is carried out with the same conditions previously described. The viscosity is adjusted for a given protein type and concentration by adding water, hydrocolloids, salt and buffer salts and is carried out experimentally by measuring the viscosities.

In the following preferred and more preferred ranges of the ingredients for the egg yolk substitute are summarized:

| Ingredient | Preferred (%) | More p. (%) |
|---|---|---|
| Oil and/or fat replacers | 0.1-20 | 3.0-10.0 |
| Carotenoid containing vegetables | 0.1-10.0 | 3.0-6.0 |
| Hydrocolloid | 0.1-5.0 | 0.5-3.0 |
| Protein source | 3.0-25 | 10-20 |
| Salt (K+, Ca+, Na+) | 0.05-3 | 0.1-2.0 |
| Flavours | 0.05-5.0 | 0.5-3.0 |
| Fibers | 0.0-5.0 | 0.05-3.0 |
| Starches | 0.0-5.0 | 0.5-3.0 |
| Emulsifiers | 0.0-1.0 | 0.075-0.25 |
| Natural colorant | 0.0-2.5 | 0.1-2.0 |
| Water | ad to 100 | ad to 100 |

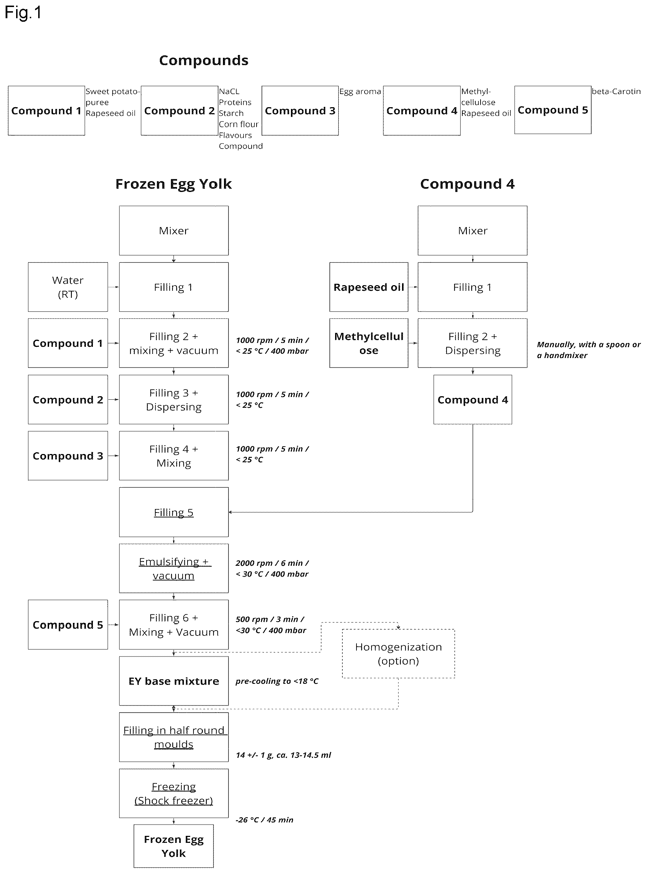

The method of preparing the egg yolk is shown in detail in the scheme of Fig. 1 which describes a preferred embodiment of the present invention. In this figure, just for illustrative purposes, rapeseed oil has been chosen as the fat component; corn starch has been chosen as an optionally added starch source; methylcellulose, carrageenan and xanthan gum have been chosen as an added hydrocolloid; pea protein and/or fava bean protein has been chosen as a protein source; sweet potato and beta-carotene have been chosen as carotenoid-containing components; commercially available egg aroma has been chosen as an added flavour; and NaCl has been chosen as added salt. However, these choices should not be understood to be limiting. It is possible to replace each of these components by any one of the other above mentioned components of the same type. In this method two-third (2/3) of the oil is mixed with sweet potato puree and added to water in a first vessel under stirring at about 300-800 rpm, preferably 500 rpm. Then salt, protein (fava bean protein and/or pea protein), cold set gelling hydrocolloid (carrageenan and/or xanthan gum) and native corn flour are added and mixed for about 5-10 min., preferably 6 minutes. Then the egg aroma flavour is added. In another vessel methylcellulose is dispersed in the remaining one-third part of the oil and then added to the mix of the first vessel. This mix is then stirred for about 3-10 minutes, preferably 5 minutes, at about 1000-2500 rpm, preferably 1100-2000 rpm, while keeping the temperature below 30°C. This emulsion is then subjected to a vacuum treatment at 200-800 mbar, preferably 400 mbar. As last component beta-carotene is added to the emulsion and stirred for about 3-10 minutes, preferably 5 minutes, at about 200-800 rpm, preferably about 500 rpm. A vacuum of about 400 mbar is applied and an optional homogenization step follows. The obtained egg yolk base mixture is then filled in half-round moulds, and (shock)-frozen to obtain frozen egg yolk.

The frozen egg yolk substitute product is now brought together with an egg white substitute product to provide a biphasic egg substitute product, which is generally suitable for the production of a "boiled egg".

However, the mixture also referred to as "egg white" or "egg white substitute product", is prepared beforehand. It should have a protein content of 3% to 25%. In some embodiments, the amount of proteins is preferably 5.0% - 20.0% or 8.0% - 15.0% in the egg white substitute product according to the invention. Suitable protein sources are vegetable raw materials from the group of legumes, cereals, oilseeds, microorganisms and (micro)algae, preferably plant proteins from peas (Pisum sativum), chickpeas (Cicer arientinum), garden beans (Phaseolus vulgaris), faba beans (Vicia faba), sweet lupins (Lupinus), Lentils (Lens culinaris), maize (Zea mays), hemp (Cannabis sativa), sweet potatoes (Ipomoea batatas), manioc (Manihot esculenta), table potatoes (Solanum tuberosum), pumpkin (Cucurbita), linseed (Linum usitatissimum), rapeseed (Brassica napus), soy (Glycine max), oats (Avena sativa), duckweed (Lemna), bacteria (e. g. e.g. Lactobacillus spp, Streptococcus spp., and Bifidobacterium spp), yeasts (e.g. Saccharomyces cerevisiae, molds (e.g. Aspergillus spp., Mucor spp., and Rhizopus spp.), nori algae and/or wakame algae, particularly advantageous are peas, chickpeas, faba bean, lupin and mung bean. As protein source (raw and/or hydrolyzed and/or fermented) flours, protein concentrates, protein isolates and/or any combination thereof, which can be obtained from the plants and plant parts per se, their seeds, tubers and/or their fruits of the aforementioned raw materials, can be used. The processing and nutritional suitability of the plants and respective plant parts is sufficiently known to the skilled person in the field of food technology.

Salt is added to enhance flavour. Preferably are used NaCl, KCl, NaH₂PO₄, Na₂HPO₄, Na₂P₄O₇ (tetrasodium pyrophosphate), Na-, Ca- or K-citrate, Ca-lactate, CaCl₂, Na₃PO₄ and/or kala-namak (black salt) or a salt comparable to kala-namak, which has a proportion of sulphur compounds. To this end, in some embodiments, the amount of salt is less than 4.00%, e.g., 0.05 - 3.0%, preferably 0.1-2.0 %. Additionally, other flavor formulations, masking agents, or a combination of thereof, can be used to hide undesired notes (e.g. beanie and bitter) to mimic chicken's egg flavour.

The egg white substitute product may optionally further contain small amounts (less than 10.0%, preferably less than 5%, 3% or 2%, preferably 0.05-3.0%) of additional minor components. These may be spices, dried vegetables or fruits, sugar, preservatives, acidifiers, buffering agents, fibers, thickeners or health-promoting additives. Additives which function as preservatives, buffering agents and/or acidifiers are glucono-delta-lactone, buffered vinegar (E-267), potassium lactate (E-326) or potassium sorbate. Examples of health-promoting additives include iodine, vitamins (e.g. vitamins B1, B2, B3, B5, B7, B9, B12, C, D3 or E) and/or minerals (e.g. Ca or Mg).

The egg white substitute product has to contain hydrocolloids for setting the desired viscosity and gelation during heating and cooling. These hydrocolloids are primarily cold-set gelling hydrocolloids. Cold-set gelling hydrocolloids swell in aqueous environments and have different hydration/activation temperatures. The hydrocolloids need to be activated (e.g. by boiling) to form a gel, if the concentration is enough after cooling to or below the gelling temperature. Hydrocolloids from algae, preferably carrageenan and/or agar, are used as cold-set gelling hydrocolloids. Other hydrocolloids, preferably gellan gum, locust bean gum, guar gum, alginate, konjac gum or their derivatives (e.g. glucomannan pyrophosphate) and/or xanthan gum, are also suitable to set the desired consistency and support the permanent solidification of the vegan egg white. According to the invention, the amount of hydrocolloids in the egg white is between 0.1% to 5.00% (e.g. 4.75%, 4.50%, 4.25%, 4.00%, 3.75%, 3.50%, 3.25%, 3.00%, 2.75%, 2.50%, 2.25%, 2.00%, 1.75%, 1.50%, 1.00%, 0.75% or equal to or less than 0.50%). In some embodiments, the amount of hydrocolloids in the egg white replacement product is 0.1%-4.5%, (e.g., 0.2%-4.00%, 0.5%-3.00% or 0.75%-2.00%). An amount of hydrocolloids of less than 3.00% provides stability and texture comparable to a chicken's egg after cooking. In certain embodiments a combination of one or more thermogelling hydrocolloids with one or more cold-set gelling hydrocolloids has proven to be advantageous, whereby the two types differ in their behaviour when the temperature changes. The hydrocolloids which gel rapidly when the temperature is raised to > 40°C are called "thermogels", from which the gel could be thermoreversible and are preferably modified celluloses, preferably curdlan, methyl celluloses, hydroxyethyl celluloses, hydroxypropylmethyl celluloses (HPMC) and/or hydroxypropyl celluloses. However, the resulting gelation is only temporary: when cooled to < 40°, the gel turns back into the original viscous solution. To produce thermogelling, a certain minimum concentration of the thermogelling hydrocolloids should be present, which is around 1.5 g/l for methyl celluloses. The determination of the minimum concentration for other thermogelling hydrocolloids is possible for the skilled person without great experimental effort. Below this concentration, no gelation occurs when the aqueous solution is heated. The split between thermogelling and cold-set gelling hydrocolloids is preferably 10:90 , more preferably 15:85 or 20:80 .

Optional is also the addition of at least one native or (partially) pregelatinized starch, preferably in an amount of 0.5% - 3.0%. Native or (partially) pregelatinized starch is preferably obtained from corn starch, pea starch, potato starch or rice starch by mechanical processing in the presence of water with or without the application of heat. The starch is used mainly as a gelling agent but it can also act as binding or thickener agent.

The egg white may have an initial viscosity, defined as resistance to deformation at a certain rate, in the range between 0.3 Pa-s and 200 Pa-s, 0.005 Pa-s and 20.0 Pa-s, preferably 0.1 Pa-s - 19 Pa-s, 1.0 Pa-s - 15 Pa-s or 5.0 Pa-s - 10.0 Pa-s. The viscosity can be measured using a rheometer (MCR92 SN83968846, Anton Paar GmbH, Graz, Austria) with a cylindrical measuring system (CC27-SN94184) or a plate system (PP50/S SN100671) with a measuring gap d = 1.136 mm and 1 mm respectively. A person skilled in the art knows how to measure viscosity with a rheometer. Only exemplary conditions are described below. If using the cylinder system, this system is filled with e.g. 15 ml of the sample. The sample is equilibrated for 5 minutes at 10°C and left like this for the measurement. The rotation is increased linearly from 0.1 - 1000 s-1 within 30 s. If using the plate system, the conditions are the same but the sample preparation differs, where an amount of e.g. 2 g is added to the plate surface. Afterwards, the upper plate sets in the right position, the sample is trimmed and the measurement is carried out with the same conditions previously described.The viscosity is adjusted for a given protein type and concentration by adding water, hydrocolloids, salt and buffer salts and is carried out experimentally by measuring the viscosities.

In the following preferred and more preferred ranges of the ingredients for the egg white substitute are summarized:

| Ingredient | Preferred (%) | More p. (%) |
|---|---|---|
| Hydrocolloid | 0.1-5.0 | 0.5-3.0 |
| Protein source | 3.0-25 | 8.0-15 |
| Salt (K+, Ca+, Na+) | 0.05-3.0 | 0.1-2.0 |
| Flavours | 0.05-5.0 | 0.5-3.0 |
| Fibers | 0.0-5.0 | 0.5-3.0 |
| Starches | 0.0-5.0 | 0.5-3.0 |
| Water | ad to 100 | ad to 100 |

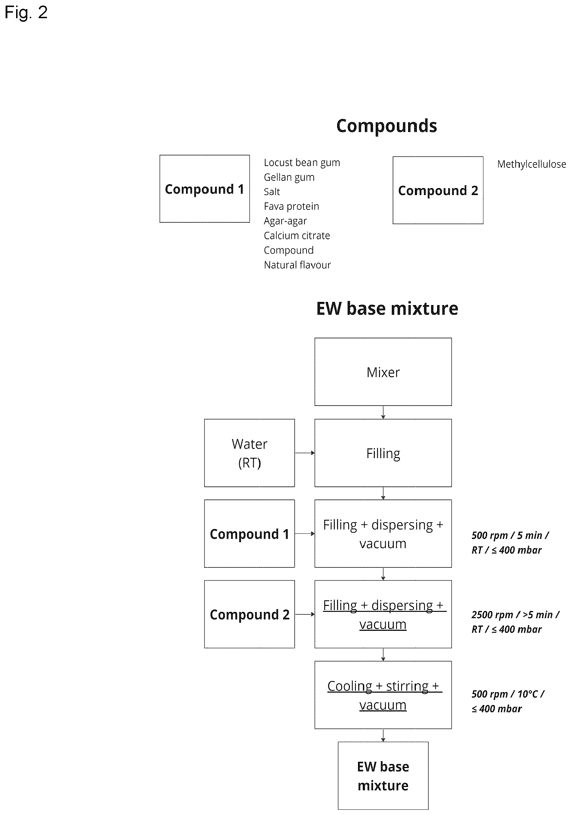

The method of preparing the egg white is shown in detail in the scheme of Fig. 2 which describes a preferred embodiment of the represent invention. In this figure, just for illustrative purposes, locust bean gum, gellan gum, k-carrageenan, xanthan gum and agar-agar have been chosen as cold-set or reversibly gelling hydrocolloids; methylcellulose has been chosen as thermogelling hydrocolloid; Faba bean protein has been chosen as a protein source; and NaCl and calcium citrate have been chosen as optionally added salts. However, these choices should not be understood to be limiting. It is possible to replace each of these components by any one of the other above mentioned components of the same type. In this method the reversibly gelling hydrocolloids (e.g. agar-agar, gellan gum, locust bean gum), salts (e.g. NaCl, Ca-citrate), protein component (e.g. faba bean protein) and optionally flavors are mixed with water at room temperature and stirred until well dispersed. Then optionally a thermogelling hydrocolloid (e.g. methylcellulose) is added to the mixture and stirred (e.g. 2000 - 3000 rpm, preferably 2500 rpm) at room temperature for at least 5 minutes. The resulting mixture is cooled down below 10°C while stirring and a vacuum of 400 mbar or lower is applied. The resulting egg white base mixture can then be used together with the frozen egg yolk for the product assembly to provide a boiled egg.

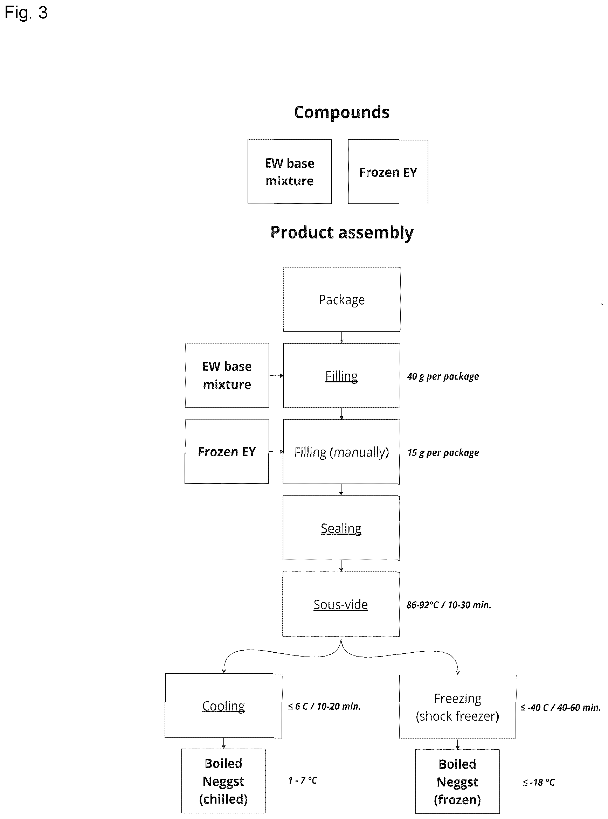

The product assembly is described in Fig. 3. Here the obtained egg white base mixture is filled into a package, e.g. a plastic bag or food container. The obtained frozen egg yolk is then placed, preferably manually, in the middle of the egg white base mixture in the package. The package is sealed and placed in a sous-vide bath. Preferred conditions are 80-95°C, more preferred 86-92°C, for 5-30 minutes, more preferred 10-20 minutes. After removal from the sous-vide bath, the package containing the final product (boiled egg) may be cooled below room temperature and maintained in a refrigerator until use or it may be shock-frosted and maintained as a frozen product in the freezer until use.

For each of the aforementioned methods, the egg yolk substitute product can be continuously dosed by suitable dosing devices, and put upon freezing into prepared packages in which the liquid egg white phase is located and in which the ratio of egg yolk substitute product to egg white substitute product corresponds approximately to that of an animal egg.

The vegan boiled egg (final product) can be eaten hot or cold. To reheat the boiled egg, the sealed package can be placed in boiling water for 3 minutes before, carefully, opening the package.

The invention is further illustrated by the figures, which show:
Fig. 1: Diagram for the production of an egg yolk substitute product to be used in the preparation of a boiled egg
Fig. 2: Diagrams for the production of an egg white substitute product to be used in the preparation of a boiled egg
Fig. 3: Diagram for the assembly of the egg yolk substitute product with the egg white substitute product for providing a boiled egg product

The following examples describe egg substitute products according to the invention in boiled egg form. These are not limited to exactly these embodiments.

### Example 1: Preparation of egg yolk substitute product (egg yolk base mixture)

| Product Name | amount (%) |
|---|---|
| Water | 61.93 |
| Sunflower oil | 15.00 |
| Sweet potato puree | 5.70 |
| Beta carotene | 1.00 |
| NaCl | 0.08 |
| Fava bean protein | 3.43 |
| Pea protein | 5.57 |
| Native pea starch | 0.60 |
| Corn flour | 2.00 |
| Flavor/Natural Flavor | 2.45 |
| K-carrageenan | 0.85 |
| Xanthan | 0.10 |
| KCl | 0.05 |
| Methylcellulose | 1.25 |

The preparation method is exemplified in Fig. 1.
1. Mix 2 parts of oil, with water and sweet potato for 5 min. at room temperature (≤ 25°C), with a mixing speed of 100 rpm, applying vacuum (≤ 400 mbar).
2. Add the salt, proteins (pea protein, fava bean protein), carrageenan, xanthan gum, flavors, starch, corn flour, mix for 5 minutes at at room temperature (≤ 25°C) with a mixing speed of 1000 rpm, applying vacuum (≤ 400 mbar)
3. Prior to adding to the mixture, disperse the methylcellulose in one part of oil
4. Once all in, mix for at least 5 min at 2000 rpm, taking care of not reaching above 30°C, applying vacuum (≤ 400 mbar).
5. Add beta-carotene mixing at 500 rpm,taking care of not reaching above 30°C, applying vacuum (≤ 400 mbar).
6. Homogenise the mixture (optional).
6. Filling the mix into half round moulds and shock freezing to obtain frozen egg yolk.

### Example 2: Preparation of egg white substitute product (egg white base mixture)

| Product Name | amount (%) |
|---|---|
| Water | 89.3 |
| Locust bean gum | 0.05 |
| Gellan gum | 0.25 |
| Salt | 0.20 |
| Fava protein | 5.00 |
| Agar-agar | 0.70 |
| Calcium citrate | 1.00 |
| K-carrageenan | 0.85 |
| Xanthan | 0.10 |
| KCl | 0.05 |
| Methylcellulose | 1.50 |
| Natural Flavor | 1.00 |

The preparation method is exemplified in Fig. 2
1. Mix water, agar-agar, gellan gum, locust bean gum, calcium citrate, fava bean protein, natural flavor and salt at room temperature until well dispersed, under vacuum of 400 mbar or lower.
2. Add the methylcellulose at room temperature for at least 5 min at 2500 rpm, under vacuum of 400 mbar or lower.
3. Cool down to 10°C while stirring and vacuum treatment at 400 mbar or lower.

End pH: 5.897
Viscosity: 700-30000 mPas (0.5-200 1/s)

### Example 3: Assembly of a boiled egg product

The product assembly is described in Fig. 3.

The obtained egg white base mixture is filled into a plastic mould. The obtained frozen egg yolk is then placed manually in the middle of the egg white base mixture in the package. The package is sealed and placed in a sous-vide bath at 86-92°C for 10-30 minutes. After removal from the sous-vide bath the package is cooled down to ≤ 7°C and maintained in a refrigerator until use or it may be shock-frosted and maintained as a frozen product in the freezer until use.

## Claims

1. A boiled egg substitute product on a vegan basis, comprising in a food container an egg yolk substitute base mixture (1) of:
(a) drinking water
(b) one or more protein(s) from legumes, oilseeds, cereals, algae or microorganisms,
(c) vegetable fat and/or fat replacer,
(d) optionally one or more emulsifier(s)
(e) one or more cold-set gelling and/or thermogelling hydrocolloid(s),
(f) at least one carotenoid-containing foodstuff and/or a natural coloring substance,
(f) optionally at least one native or partially pregelatinized starch
(g) salt,
the mixture (1) being surrounded by an egg white substitute base mixture (2) comprising:
(i) drinking water
(ii) one or more protein(s) from legumes, oilseeds, cereals, microorganisms and/or algae,
(iii) one or more cold-setting hydrocolloids or a combination of one or more thermogelling hydrocolloid(s) with one or more cold-setting gelling hydrocolloid(s),
(iv) one or more salt(s).

2. The egg substitute product according to claim 1, wherein the mixture (1) and/or (2) further comprises a flavor formulation.

3. The egg substitute product according to claim 1 or 2, wherein the hydrocolloid (e) is methylcellulose.

4. The egg substitute product according to any of claims 1-3, wherein the hydrocolloid (e) or (iii) is a cold-setting hydrocolloid selected from carrageenan, locust bean gum, gellan gum and/or agar-agar.

5. The egg substitute product according to claim 4, wherein the hydrocolloid (iii) additionally contains methylcellulose and/or curdlan as thermogelling hydrocolloid.

6. The egg substitute product according to any one of claims 1-5, wherein the vegetable oil (c) is corn oil, rapeseed oil, coconut oil and/or sunflower oil.

7. The egg substitute product according to any one of claims 1-6, wherein the vegetable protein (b) or (ii) is pea protein, lupin protein, potato protein, chickpea protein, oat protein, rice protein, wheat protein, and/or faba bean protein.

8. The egg substitute product according to claim 7, wherein the plant protein is a (raw and/or hydrolyzed and/or fermented) flour, protein concentrate, protein isolate and/or any combination thereof.

9. The egg substitute product according to any one of claims 1-10, wherein the emulsifier (d) is selected from lecithin, distilled glycerin monostearate (E471), ascorbyl palmitate, sodium phosphate, potassium phosphate, propylene glycol alginate, polyoxyethyl stearate, ammonium phosphatides, acetic acid monoglycerides, lactic acid monoglycerides, citric acid monoglycerides, tartaric acid monoglycerides, stearyl tartrate or sorbitan monostearate.

10. Egg substitute product according to any one of claims 1-9, wherein the amount of proteins in mixture (2) is 5% - 25.0%.

11. A process for preparing the egg yolk substitute base mixture (1) according to any of claims 1-10, comprising the following steps:
(1) mixing in a container water, salt, one or more vegetable proteins and one or more carotenoid-containing components, optionally adding fibers and/or starches, under vacuum.
(2) dispersing a thermogelling hydrocolloid in oil.
(3) mixing the water-based mix of step (1) with the oil-based mix of step (2) under stirring, under vacuum.
(4) optionally vacuum treatment of the emulsion obtained in step (3),
(5) mixing the natural colorant under vacuum
(6) cooling the vacuum-treated emulsion obtained in step (5) to below 20°C and optionally homogenising,
(7) filling the obtained egg yolk base mixture of step (6) in half-round moulds and (shock)-freezing to obtain frozen egg yolk.

12. A process for preparing the egg white substitute base mixture (2) according to any of claims 1-10, comprising the following steps:
(i) mixing one or more cold set gelling hydrocolloids, salt, one or more vegetable proteins with water under stirring until well dispersed, under vacuum
(ii) adding optionally one or more a thermogelling hydrocolloids to the mixture under stirring and vacuum
(iii) cooling the obtained mixture below 10°C while stirring, under vacuum
(iv) optionally subjecting the obtained mixture to a vacuum treatment.

13. A process for preparing a poached egg product from the egg yolk substitute base mixture (1) and the egg white substitute base mixture (2) of any of claims 1-10, comprising the following steps:
(i) filling the egg white base mixture (2) into a food container,
(ii) placing the frozen egg yolk base mixture (2) in the middle of the egg white base mixture in the container.
(iii) sealing the container and placing it in a sous-vide bath at 80-95°C for 5-30 minutes.

14. A boiled egg substitute product obtainable by the method of claim 13.
